# EUROPÄISCHE PATENTSCHRIFT

(11) **EP 4 102 743 B1**
(45) Veröffentlichungstag und Bekanntmachung des Hinweises auf die Patenterteilung: **11.06.2025**
(21) Anmeldenummer: 22166692.8
(22) Anmeldetag: 05.04.2022
(51) Int. Cl.: H04J 3/06, H04Q 9/00, G06F 11/18, H04L 12/40, B62D 6/00

(54) **ELEKTRONISCHES SYSTEM EINES KRAFTFAHRZEUGES MIT MINDESTENS ZWEI STEUERGERÄTEN, DIE JEWEILS EINEN EIGENEN TAKTGEBER AUFWEISEN UND VERFAHREN ZUR STEUERUNG EINES SOLCHEN SYSTEMS**
ELECTRONIC SYSTEM OF A MOTOR VEHICLE WITH AT LEAST TWO CONTROL UNITS EACH HAVING ITS OWN CLOCK AND METHOD FOR CONTROLLING SUCH A SYSTEM
SYSTÈME ÉLECTRONIQUE D'UN VÉHICULE AUTOMOBILE POURVU D'AU MOINS DEUX APPAREILS DE COMMANDE, COMPRENANT RESPECTIVEMENT UNE HORLOGE PROPRE, ET PROCÉDÉ DE COMMANDE D'UN TEL SYSTÈME

(30) Priorität: 09.06.2021 DE 102021205826
(43) Veröffentlichungstag der Anmeldung: 14.12.2022
(73) Patentinhaber: VOLKSWAGEN AG, 38440 Wolfsburg (DE)
(72) Erfinder: Kreis, Christopher, 38126 Braunschweig (DE); Rüger, Tobias, 38108 Braunschweig (DE)

(56) Entgegenhaltungen:
- WO-A1-2013/163793
- WO-A2-2005/114419
- DE-A1- 102019 211 021
- US-A1- 2011 254 602
- US-A1- 2017 262 011
- US-A1- 2020 249 353
- POUDEL BIKASH ET AL: "Design and comparative evaluation of GPGPU- and FPGA-based MPSoC ECU architectures for secure, dependable, and real-time automotive CPS", 2017 IEEE 28TH INTERNATIONAL CONFERENCE ON APPLICATION-SPECIFIC SYSTEMS, ARCHITECTURES AND PROCESSORS (ASAP), IEEE, 10 July 2017 (2017-07-10), pages 29 - 36, XP033134442, DOI: 10.1109/ASAP.2017.7995256

## Beschreibung

Die Erfindung betrifft ein elektronisches System für ein Kraftfahrzeug mit mindestens zwei miteinander kommunizierenden Steuergeräten, die jeweils zum Senden und Empfangen von Signalinformationen ausgebildet sind und jeweils einen eigenen Prozessor mit eigenem Taktgeber zum Takten des jeweiligen Steuergerätes aufweisen. Ferner betrifft die Erfindung ein Verfahren zur Steuerung eines solchen Systems. Insbesondere betrifft die Erfindung ein elektronisches System mit drei oder mehr Steuergeräten, die jeweils über eigene Prozessoren verfügen, welche aufgrund ihrer Bauweise nicht exakt gleich getaktet sind. Dies ist insbesondere bei Prozessoren mit Taktgebern in Form von Quarzen der Fall. Das führt dazu, dass die in den einzelnen Prozessoren enthaltenen Taktgeber geringfügig asynchron laufen, was wiederum zur Folge hat, dass Berechnungsergebnisse der Prozessoren nicht exakt gleichzeitig, sondern abhängig von der Asynchronität zeitversetzt vorliegen.

Die Erfindung betrifft insbesondere elektronische Systeme in Form von Lenksystemen der Steer-by-Wire Bauart, insbesondere solche, die einen Force-Feedback-Aktuator (FFA) aufweisen, welcher direkt oder mittelbar, insbesondere über ein Getriebe, mit einem Steuerelement verbunden ist. Unter einem Steuerelement im Sinne der Erfindung wird insbesondere ein Lenkrad oder ein anderes Lenkinstrument verstanden, insbesondere ein Lenkinstrument eines Fahrzeuges.

Lenksysteme der Steer-by-Wire Bauart benötigen keine direkte mechanische Verbindung zwischen einem Lenkrad oder einem sonstigen Lenkinstrument und den lenkbaren Rädern. Daher ist keine Lenkzwischenwelle erforderlich. Das Lenkgefühl, etwa eine haptische Rückmeldung am Lenkrad als Reaktion auf die Berührung eines Bordsteins mit den Rädern, wird von dem vorstehend genannten Force-Feedback-Aktuator bereitgestellt. Um den Force-Feedback-Aktuator anzusteuern, werden Signale von Radaktuatoren (RWA) an den Force-Feedback-Aktuator übermittelt, insbesondere über ein sogenanntes BUS-System.

Lenksysteme der Steer-by-Wire Bauart weisen, insbesondere wenn sie für zweispurige Kraftfahrzeuge vorgesehen sind, üblicherweise mindestens zwei Radaktuatoren (RWA) auf. Dies ist darauf zurückzuführen, dass an derartige Lenksysteme - und auch an andere elektronische Systeme in Kraftfahrzeugen - hohe Sicherheitsanforderungen gestellt werden, gemäß welchen Steuergeräte für besonders sicherheitsrelevante Elemente, wie z.B. einen Radaktuator, redundant ausgeführt werden müssen. Es sind dann üblicherweise zwei Steuergeräte für die beiden Radaktuatoren vorgesehen, die insbesondere derart mit den Radaktuatoren verschaltet sind, dass jedes Steuergerät beide Radaktuatoren ansteuern kann, so dass bei Ausfall eines Steuergerätes für das andere Steuergerät weiterhin eine zuverlässige Steuerung des Kraftfahrzeuges gewährleistet ist.

Der Force-Feedback-Aktuator und die mindestens zwei Radaktuatoren von derartigen Lenksystemen der Steer-by-Wire Bauart sind üblicherweise funktional jeweils mit einem Prozessor verbunden, insbesondere einem Mikroprozessor, so dass an den beschriebenen Lenksystemen drei Prozessoren bzw. Mikroprozessoren mit voneinander unabhängigen Taktgebern beteiligt sind. Es ergibt sich damit ein Lenksystem, bei welchem an der Bildung eines Lenkgefühls mittels Force-Feedback-Aktuator noch zwei Radaktuatoren mitwirken, so dass insgesamt drei Prozessoren - insbesondere Mikroprozessoren - an der Bildung des Lenkgefühls beteiligt sind.

Die Prozessoren der vorstehend beschriebenen Lenksysteme bzw. elektronischen Systeme sind üblicherweise mit mindestens einem weiteren Element funktional verbunden, das zur Ausführung bestimmter Vorgänge von den Prozessoren ansteuerbar ist. Bei einem solchen weiteren Element kann es sich, insbesondere wenn es sich bei dem elektronischen System um ein Lenksystem der Steer-by-Wire Bauart handelt, beispielsweise um einen Elektromotor handeln. Im Speziellen wird auf eine Verbindung mit einem 6-phasigen Elektromotor verwiesen, dessen Ansteuerung über die drei Prozessoren mittels Pulsweitenmodulation erfolgt, wobei jeweils drei Phasen einem Prozessor zugeordnet sind. Die vorstehend erläuterte Asynchronität führt zu Instabilitäten, Ungenauigkeiten und nicht ausreichender Effizienz beim abgegebenen Motormoment. Dies führt zu einem nicht optimalen Lenkgefühl und/oder zu einer nicht optimalen Stellgenauigkeit der Lenkung.

Aus DE 100 02 522 C1 sind ein Verfahren zur Bereitstellung von konsistenten Eingangswerten und ein Mehrrechnersystem bekannt, die insbesondere in Verbindung mit Kraftfahrzeugen eingesetzt werden sollen. Diese Druckschrift lehrt, in Verbindung mit sicherheitsrelevanten Mehrprozessorsystemen in Kraftfahrzeugen, wie z.B. Brake-by-Wire oder Steer-by-Wire, Prozessoren ungefähr synchron mit derselben Taktfrequenz zu betreiben. Dabei wird auf eine Synchronisierung der Rechnereinheiten mittels des Bus-Protokoll TTP verwiesen, mit welchem sich Abweichungswerte von unter 100 µs erreichen lassen sollen. Zu dem eingangs beschriebenen Problem, dass Prozessoren - insbesondere mit Hilfe von Quarzen getaktete Prozessoren - nicht exakt synchron getaktet sind, wird gelehrt, ein Überschreiben eines gespeicherten Werts zu unterbinden, um so Auswirkungen durch geringfügig voneinander abweichende Zeitbasen zu vermeiden. Mit anderen Worten ausgedrückt, wird der Speicher gemäß dieser Druckschrift kurzzeitig "eingefroren". Es wird als vorteilhaft beschrieben, dass keine aufwendigen Abgleichmechanismen auf Rechnerebene notwendig sind. Nachteilig an diesem Verfahren und Mehrrechnersystem ist, dass asynchrone Taktung der Prozessoren schlichtweg ignoriert wird, was insbesondere bei mehreren zeitlich knapp hintereinander ablaufenden Ereignissen in Verbindung mit Lenksystemen zu von der Realität abweichenden qualitativ minderwertigen Ergebnissen führen kann.

Aus DE 10 2007 051 173 sind ein Verfahren und eine Vorrichtung zum Betreiben einer Schaltungsanordnung mit einem Taktsignalgeber und einem Referenztaktsignalgeber bekannt, gemäß welchen die Schaltungsanordnung mittels des Taktsignalgebers getaktet wird und dazu ausgebildet ist, abhängig von einem vorgegebenen Sensorsignal Zähler entweder zu inkrementieren oder zu dekrementieren. Dabei wird insbesondere auf als Taktsignalgeber eingesetzte Oszillatoren oder Schwingquarze verwiesen. Das Dokument lehrt unter anderem, die Frequenz des Taktsignalgebers zu überwachen und bei einem Verhältnis außerhalb eines vorgegebenen Verhältnisbereiches Zählerstände eines Zählers als ungültig erkannt und signalisiert werden. Das Verfahren und die Vorrichtung führen nicht zu einer qualitativen Verbesserung der Ergebnisse, sondern lediglich dazu, dass offensichtlich unbrauchbare Ergebnisse eliminiert werden.

Aus WO 2005/114419 A2 ist ein Verfahren zur fehlertoleranten Datenverarbeitung bekannt, das sich insbesondere auch auf Systeme mit drei Prozessoren bezieht, die miteinander verschaltet sind. Es wird nicht nur auf Steer-by-Wire und Brake-by-Wire Systeme Bezug genommen, sondern auch auf Probleme verwiesen, die sich aus einer asynchronen Taktung der Prozessoren solcher Systeme ergeben. Gemäß diesem Verfahren wird vorgeschlagen, die Zeiten der Prozessoren regelmäßig abzugleichen und zu synchronisieren. Nachteilig ist, dass die Synchronisierung stets nach einem vorgegebenen Schema in gleicher Art und Weise durchgeführt wird.

Aus DE 10 2019 211 021 A1 ist ein Verfahren zum Detektieren eines Zeitversatzes zwischen einem ersten Steuergerät und einem zweiten Steuergerät bekannt, wobei die Steuergeräte jeweils mit einer identischen Spannungsquelle verbunden sind. Im Rahmen des Verfahrens werden die Steuergeräte mittels der Spannungsquelle mit Spannung versorgt, die einem stochastischen Prozess unterliegt. Die Spannung wird digitalisiert und es wird ein erster Stempel aufgrund des stochastischen Spannungsverlaufs der digitalisierten Spannung mittels des ersten Steuergeräts generiert. Ferner wird ein zweiter Stempel aufgrund des stochastischen Spannungsverlaufs der digitalisierten Spannung mittels des zweiten Steuergeräts generiert. Der erste und/oder der zweite Stempel werden an eine Auswerteeinrichtung übermittelt und verglichen. Anschließend wird ein Zeitversatz zwischen dem ersten Steuergerät und dem zweiten Steuergerät festgestellt, wenn sich der erste Stempel von dem zweiten Stempel unterscheidet. Durch die Verwendung einer Spannungsquelle für beide Steuergeräte können die Steuergeräte bereits nicht als redundant betrachtet werden.

Der Erfindung liegt die Aufgabe zugrunde, ein elektronisches System mit mindestens zwei Steuergeräten zur Verfügung zu stellen, die jeweils einen eigenen Prozessor mit eigenem Taktgeber aufweisen, das eine optimierte Synchronisierung der Taktgeber aufweist.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes elektronisches System eines Kraftfahrzeuges umfasst mindestens zwei miteinander kommunizierende Steuergeräte, die jeweils zum Senden und Empfangen von Signalinformationen ausgebildet sind und jeweils einen eigenen Prozessor mit eigenem Taktgeber zum Takten des jeweiligen Steuergerätes aufweisen, wobei ein Steuergerät als Master-Steuergerät definiert ist und der Regelkreis dazu ausgelegt ist, die Zeitdifferenz des mindestens einen anderen Steuergeräts gegenüber dem Master-Steuergerät zu ermitteln, um durch Einwirkung des Regelkreises auf den Taktgeber des mindestens einen anderen Steuergeräts die Asynchronität der Taktgeber zu verringern oder zu eliminieren. Dabei ist jedes nicht als Master-Steuergerät definierte Steuergerät dazu ausgebildet, zusätzlich zu einer Signalinformation einen Zeitstempel mit dem Zeitpunkt der Erzeugung eines Signals zu erstellen, wobei das mit dem Zeitstempel versehene Signal mit einem vom Taktgeber erzeugten Taktsignal korrespondiert und wobei mindestens ein Regelelement vorgesehen ist, welches derart ausgelegt ist, dass eine Zeitdifferenz zwischen zwei Zeitstempeln, welche sich auf die gleiche Signalinformation beziehen, als Größe eines Regelkreises zur Reduzierung der Asynchronität der Taktgeber berücksichtigt wird, um eine Asynchronität der Taktgeber zu verringern oder zu eliminieren. Dabei umfasst der Regelkreis ein Vergleichsmodul, den Taktgeber und das Regelelement, und der Regelkreis ist derart ausgelegt, dass an dem Vergleichsmodul beim Empfangen eines Signals der Zeitpunkt der Erzeugung des Signals mit dem korrespondierenden, von dem Taktgeber erzeugten Taktsignal abgeglichen wird und das Vergleichsmodul aus der Zeitdifferenz aus dem Zeitpunkt der Erzeugung des Signals und dem nächstkommenden Taktsignal einen Zeitunterschied ermittelt und ein entsprechendes Zeitdifferenz-Signal an das Regelelement sendet. Das Regelelement stellt basierend auf dem Zeitdifferenz-Signal ein Korrektursignal für den Taktgeber bereit. Mit anderen Worten ausgedrückt, besteht die allgemeine Idee der Erfindung darin, die sich in der Praxis geringfügig unterscheidende Taktung der Taktgeber mit Hilfe eines Regelkreises zu synchronisieren bzw. die Abweichungen der Taktungen mit Hilfe eines Regelkreises derart zu verändern, dass die Differenzen der (zwei oder mehr) Taktgeber zueinander möglichst verringert oder vollständig eliminiert werden. Dadurch kann eine (optimierte) Synchronisierung erfolgen und - insbesondere in Verbindung mit sicherheitsrelevanten Funktionen eines Kraftfahrzeuges - eine höhere Stabilität und Genauigkeit von elektronischen Systemen erzielt werden.

In einer ersten praktischen Ausführungsform eines erfindungsgemäßen elektronischen Systems ist ein Steuergerät als Master-Steuergerät definiert. Der Regelkreis ist in diesem Fall dazu ausgelegt, die Zeitdifferenz des mindestens einen anderen Steuergeräts gegenüber dem Master-Steuergerät zu ermitteln, um durch Einwirkung des Regelkreises auf den Taktgeber des mindestens einen anderen Steuergeräts die Asynchronität der Taktgeber zu verringern oder zu eliminieren. Diese Ausführungsform ist relativ einfach und kostengünstig realisierbar und hat den Vorteil, dass schon bei der Konstruktion des Systems festgelegt werden kann, welches Steuergerät als Master-Steuergerät definiert sein soll. Wenn es sich bei dem erfindungsgemäßen elektronischen System um eine elektronische Lenkung der Steer-by-Wire Bauart handelt und als Steuergeräte ein Steuergerät eines Force-Feedback-Aktuators und zwei - insbesondere redundante - Steuergeräte für Radaktuatoren vorgesehen sind, ist es in Verbindung mit dieser Ausführungsform bevorzugt, das dem Force-Feedback-Aktuator zugeordnete Steuergerät als Master-Steuergerät zu definieren. Dies hat den Vorteil, dass bei Ausfall eines der Steuergeräte des Radaktuators der Regelkreis mit dem Master-Steuergerät und dem noch funktionierenden Steuergerät des anderen Radaktuators weiterhin funktioniert, so dass die Funktionsfähigkeit des Regelkreises bei Ausfall eines Steuergeräts für den Radaktuator nicht gefährdet ist.

Es ist auch eine Ausführungsform eines elektronischen Systems bekannt, bei welchem drei Steuergeräte vorgesehen und dazu ausgebildet sind, zusätzlich zu einer Signalinformation einen Zeitstempel mit dem Zeitpunkt der Erzeugung eines Signals zu erstellen und Zeitstempel der anderen Steuergeräte zu empfangen, wobei jedes Steuergerät dazu ausgebildet ist, den eigenen Zeitstempel mit den dazugehörigen Zeitstempeln der anderen Steuergeräte zu vergleichen und wobei mindestens ein Entscheidungsmodul vorgesehen ist, das dazu ausgebildet ist, auf der Grundlage der von jedem Steuergerät ermittelten Zeitdifferenzen eine für alle Steuergeräte verbindliche Entscheidung zu treffen, um eine Asynchronität der Taktgeber mit möglichst geringem Regelaufwand zu verringern oder zu eliminieren. Dabei wird auf eine vorzeitige Festlegung bzw. die Definition eines (immer gleichbleibenden) Master-Steuergeräts verzichtet. Stattdessen werden von jedem Steuergerät die Zeitdifferenzen zu den anderen Steuergeräten ermittelt, was es ermöglicht, basierend auf den dann ermittelten Zeitabweichungen der Zeitstempel mit Hilfe des Entscheidungsmoduls eine für alle Steuergeräte verbindliche (temporäre) Entscheidung zu treffen, welche beiden Steuergeräte sich an welches andere Steuergerät mit Hilfe des Regelkreises angleichen sollen. Das Steuergerät, an welches sich die anderen Steuergeräte gemäß der (temporären) Entscheidung anpassen sollen, kann insoweit als temporäres Master-Steuergerät angesehen werden. In diesem Fall ist es folglich Voraussetzung, dass sich jedes Steuergerät an die beiden anderen Steuergeräte anpassen kann. Dabei kann es - insbesondere nach einem Neustart des elektronischen Systems - zu einem Wechsel des temporären Master-Steuergerätes kommen.

In einer weiteren praktischen Ausführungsform eines erfindungsgemäßen elektronischen Systems ist als Regelelement ein stetiger linearer Regler vorgesehen. Insbesondere wird in diesem Zusammenhang auf einen PI-Regler verwiesen. Derartige Regelelemente sind nicht nur als Standardbauteile relativ kostengünstig verfügbar. Es hat sich ferner gezeigt, dass mit derartigen Regelelementen auch für den beschriebenen Anwendungsfall eine relativ effiziente und genaue Regelung stattfinden kann, mit welcher sich die Asynchronität kurzfristig signifikant verringern lässt.

Das Vorstehende gilt insbesondere für elektronische Systeme mit PI-Reglern, deren P-Glied zur dynamischen Anpassung der Takte und deren I-Glied zur Ausregelung konstanter Synchronitätsabweichungen ausgelegt ist.

In einer anderen Ausführungsform eines erfindungsgemäßen elektronischen Systems sind mindestens zwei Regelelemente vorgesehen, die zu einer Kaskadenregelung verschaltet sind. Durch einen solchen, etwas komplexeren Aufbau, kann die Regelung im Einzelfall weiter optimiert werden, insbesondere wenn mit dem zuvor beschriebenen Pl-Regler keine zufriedenstellende Reduzierung der Asynchronität erreicht wird und/oder wenn die Regelungsdauer zu hoch ist.

Wenn bei einem elektronischen System, insbesondere bei einem elektronischen System einer Lenkung nach der Steer-by-Wire Bauart, mindestens zwei Steuergeräte Teil einer redundanten Steuerung sind, wirkt sich die Reduzierung der Asynchronität besonders deutlich auf die Verbesserung der Exaktheit des Systems aus. Insbesondere können haptische Unschärfen bei einer Lenkung, wie z.B. ein unechtes, weil zeitversetztes Ansprechen eines Force-Feedback-Aktuators, in diesem Fall vermieden werden.

Das Vorstehende gilt insbesondere für elektronische Systeme mit zwei Steuergeräten, die redundant ausgeführte Steuergeräte für Radaktuatoren einer elektronischen Lenkung der Steer-by-Wire Bauart sind und ein weiteres Steuergerät, das einem Force-Feedback-Aktuator zugeordnet ist, wobei die Steuergeräte alle funktional miteinander verbunden sind.

In einer bevorzugten Ausführungsform ist ein Start-Verzögerungsmodul vorgesehen, welches einen zeitverzögerten Start des Regelkreises ermöglicht und/oder den Start des Regelkreises vom Eintreten einer oder mehrerer Bedingungen abhängig macht. Hintergrund dieser Ausführungsform ist, dass es nach dem Starten eines elektronischen Systems zu einem zeitverzögerten Start der einzelnen Elemente, insbesondere der Steuergeräte mit den dazugehörigen Taktgebern kommen kann. Dies kann - wenn kein Start-Verzögerungsmodul vorgesehen ist - dazu führen, dass aufgrund des noch nicht erfolgten Starts eines Steuergerätes bzw. dessen Taktgeber sehr große Differenzen zwischen einzelnen Zeitstempeln auftreten bzw. keine miteinander korrespondierenden Zeitstempel erzeugt werden. Dies würde ohne Start-Verzögerungsmodul - insbesondere im Falle großer Differenzen - zu einem unnötig langen Regelvorgang führen. Dementsprechend ist es bevorzugt, den Regelkreis erst zeitversetzt zu starten, beispielsweise nach 10, 50, 100, 500 oder 1.000 Signalen. Diese Zahl wird vorzugsweise so gewählt, dass sichergestellt ist, dass alle Steuergeräte zuverlässig vollständig gestartet sind und deren Taktgeber bereits in ihrer Standard-Taktung laufen.

Die Erfindung betrifft auch das folgende Verfahren.

Bei dem erfindungsgemäßen Verfahren zur Steuerung eines elektronischen Systems ist eines der Steuergeräte als Master-Steuergerät definiert, und jedes nicht als Master-Steuergerät definierte Steuergerät sendet zyklische Signalinformationen mit Zeitstempel und einer fest definierten Zykluszeit, wobei diese Signalinformationen als Größe des Regelkreises zur Reduzierung der Asynchronität der Taktgeber berücksichtigt werden, um eine Asynchronität der Taktgeber zu verringern oder zu eliminieren. Es ist vorteilhaft, wenn zusätzlich zu dem Zeitstempel noch ein Wert für die Verzögerung übermittelt wird, welche zwischen einem Taskbeginn und dem tatsächlichen Senden der Signalinformation vergangen ist. Wenn der Wert dieser Verzögerung berücksichtigt werden soll, kann nur auf den Wert der zuletzt festgestellten Verzögerung zurückgegriffen werden, nicht auf den aktuellen Wert. Aus dem (zuletzt festgestellten) Wert der Verzögerung, dem Zeitpunkt eines Taskbeginns und dem Zeitpunkt, zu welchem die letzte Signalinformation empfangen wurde, kann der Zeitversatz der Taktgeber verschiedener Steuergeräte exakt bestimmt werden.

Wenn die Hardware eines elektronischen Systems es zulässt, kann der Prozessortakt basierend auf dem bestimmten Zeitversatz angepasst (manipuliert) werden, um die Takte der Steuergeräte zu synchronisieren.

Wenn die Hardware es nicht zulässt, den Prozessortakt zu manipulieren, muss der Aufrufzeitpunkt der zu synchronisierenden Tasks so angepasst werden, dass die Takte der Steuergeräte synchronisiert werden. Dabei stehen die Tasks, insbesondere in Lenksystemen der Steer-by-Wire Bauart, häufig in direktem Verhältnis zu bestimmten PWM-Zyklen. Dann ist es erforderlich, auch die PWM-Zykluszeit anzupassen.

Bei einem anderen bekannten Verfahren zur Steuerung eines elektronischen Systems gemäß einer Variante b) sendet jedes Steuergerät zyklische Signalinformationen mit Zeitstempel und einer fest definierten Zykluszeit, wobei jedes Steuergerät dazu ausgebildet ist, den eigenen Zeitstempel mit den dazugehörigen Zeitstempeln der anderen Steuergeräte zu vergleichen und wobei mindestens ein Entscheidungsmodul vorgesehen und dazu ausgebildet ist, auf der Grundlage der von jedem Steuergerät ermittelten Zeitdifferenzen eine für alle Steuergeräte verbindliche Entscheidung zu treffen, um eine Asynchronität der Taktgeber mit möglichst geringem Regelaufwand zu verringern oder zu eliminieren. In diesem Fall handelt es sich um gleichberechtigte Steuergeräte insoweit, als nicht vorgegeben ist, welches der Steuergeräte den Takt vorgibt, an welchen sich die anderen Steuergeräte angleichen. Mit Hilfe des Entscheidungsmoduls kann je nach Zustand des elektronischen Systems festgelegt werden, welches der Steuergeräte den Takt vorgibt, wobei die anderen Steuergeräte bzw. die Tasks an den anderen Steuergeräten dann möglichst so angepasst werden, dass die Taktzeiten der Steuergeräte möglichst synchronisiert sind.

In Verbindung mit der bekannten Variante b) sind die beiden folgenden Ausführungsformen der Umsetzung bekannt.

Entweder sind die Regelelemente des Regelkreises so ausgelegt, dass sie den Zeitversatz nicht vollständig ausregeln und immer noch versuchen, zu einem geringen Anteil ihren eigenen Takt umzusetzen.

Oder die Regelelemente des Regelkreises sind so ausgelegt, dass sie den Zeitversatz vollständig ausgleichen können. Dann sind Mittel erforderlich, um die Anpassung der Zykluszeiten jedes Steuergerätes auch an die anderen Steuergeräte kommunizieren zu können. Der Regelkreis muss dann so ausgelegt sein, dass die Summe der Anpassungen den Wert Null anstrebt.

In beiden zuletzt beschriebenen Ausführungsformen des Verfahrens gemäß der bekannten Variante b) wird angestrebt, dass die Zykluszeit der Tasks einen Wert annimmt, welcher möglichst dem Durchschnitt der jeweils ursprünglich angestrebten Zykluszeiten entspricht.

Weitere praktische Ausführungsformen der Erfindung sind nachfolgend im Zusammenhang mit den Zeichnungen beschrieben. Es zeigen:
- Fig. 1: eine schematische Darstellung einer Lenkung der Steer-by-Wire Bauart in einer isometrischen Ansicht,
- Fig. 2: eine schematische Darstellung von Steuergeräten für die Lenkung gemäß Fig. 1,
- Fig. 3: eine schematische Darstellung eines Regelkreises zur Reduzierung der Asynchronität der Taktgeber der Steuergeräte aus Fig. 2,
- Fig. 4: eine graphische Darstellung eines elektronischen Systems mit den Steuergeräten gemäß Fig. 2 und dem Regelkreis gemäß Fig. 3, gemäß welchem der Force-Feedback-Aktuator als Master-Steuergerät definiert ist und
- Fig. 5: eine Darstellung eines elektronischen Systems gemäß Fig. 4 mit Visualisierung der Verschaltung der beiden Elektromotoren und entsprechenden Leistungselektroniken.

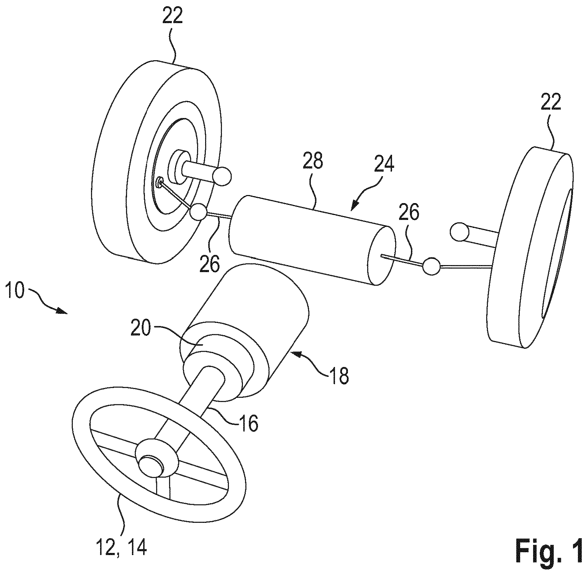

Figur 1 zeigt eine Lenkung 10 der Steer-by-Wire Bauart mit einem als Lenkinstrument 12 dienenden Lenkrad 14, einer drehfest mit dem Lenkrad 14 gekoppelten Lenkwelle 16 und einem Force-Feedback-Aktuator (FFA) 18 mit einem FFA-Elektromotor 20. Zwei lenkbare Räder 22 sind über einen Road-Wheel-Aktuator (RWA) 24 und funktional damit verbundene Lenkstangen 26 gekoppelt. Dabei weist der Road-Wheel-Aktuator (RWA) 24 einen RWA-Elektromotor 28 auf, der so gestaltet ist, dass zwei in Figur 1 nicht dargestellte RWA-Steuergeräte jeweils die halbe Leistung des RWA-Elektromotors abrufen können. Dadurch kann jedes der nicht dargestellten RWA-Steuergeräte den Elektromotor des Force-Feedback-Aktuators (FFA) 18 ansteuern, so dass ein redundantes elektronisches System betreffend den Road-Wheel-Aktuator (RWA) vorliegt.

Seitens des Road-Wheel-Aktuators (RWA) 24 werden auftretende Lenkkräfte berechnet und/oder gemessen. Seitens des Force-Feedback-Aktuators (FFA) 18 wird dann - basierend auf den Berechnungs- bzw. Messergebnissen - ein Lenkgefühl eingestellt.

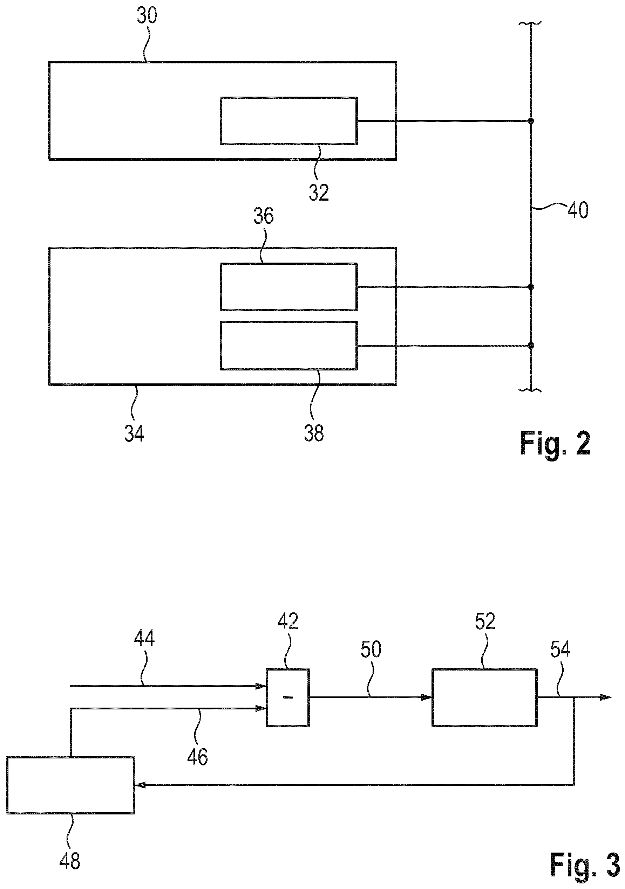

Figur 2 zeigt eine schematische Darstellung der Steuergeräte für die Lenkung in Form einer Systemarchitektur mit drei Mikroprozessoren, nämlich ein FFA-Steuergerät 30 mit einem FFA-Mikroprozessor 32, ein RWA-Steuergerät 34 mit einem ersten RWA-Mikroprozessor 36 und einem zweiten RWA-Mikroprozessor 38. Die Mikroprozessoren 32, 36, 38 sind über eine Busleitung 40 eines Bussystems miteinander verbunden.

Figur 3 zeigt einen Regelkreis, wie er bei einem erfindungsgemäßen elektronischen System implementiert sein kann. An einem Vergleichsmodul 42 wird beim Empfangen eines Signals 44 der Zeitpunkt der Erzeugung des Signals 44 abgeglichen mit dem korrespondierenden Taktsignal 46, welches von einem Taktgeber 48 erzeugt wird. Das korrespondierende Taktsignal 46 kann früher oder später eingehen. Das Vergleichsmodul 42 ermittelt aus der Zeitdifferenz aus dem Zeitpunkt der Erzeugung des Signals 44 und dem nächstkommenden Taktsignal 46 einen Zeitunterschied und sendet ein entsprechendes Zeitdifferenz-Signal 50 an ein Regelelement 52. Das Regelelement 52 stellt dann basierend auf dem Zeitdifferenz-Signal 50 ein Korrektursignal 54 für den Taktgeber 48 bereit. Dabei ist das Regelelement 52 so ausgelegt, dass eine Minimierung des Zeitdifferenz-Signals 50 angestrebt ist.

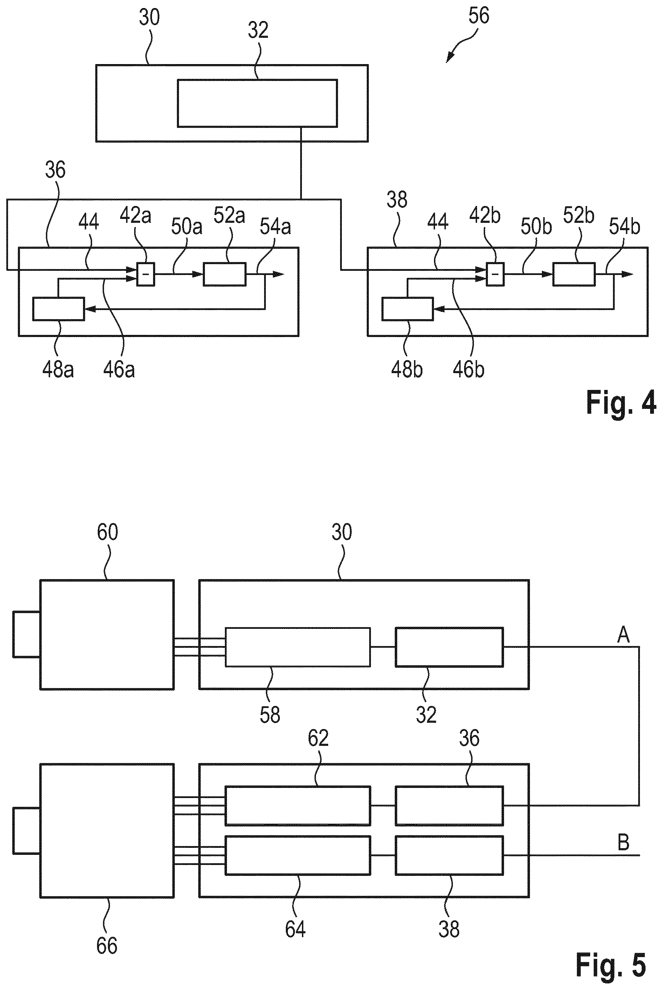

Figur 4 zeigt eine graphische Darstellung eines elektronischen Systems 56 mit den Steuergeräten aus Fig. 2 und zwei Regelkreisen gemäß Fig. 3. In diesem System ist der FFA-Mikroprozessor 32 des FFA-Steuergerätes 30, d.h. des Steuergeräts des Force-Feedback-Aktuators, als Master-Steuergerät definiert. Ein von dem FFA-Mikroprozessor 32 des FFA-Steuergerätes 30 gesendetes Signal wird mit einem Zeitstempel versehen und kommt gemeinsam mit dem Zeitstempel jeweils als Eingangssignal bei dem ersten RWA-Mikroprozessor 36 und dem zweiten RWA-Mikroprozessor 38 an. Dieses Signal wird - wie in Verbindung mit Figur 3 beschrieben - mit den korrespondierenden Taktsignalen 46a, 46b abgeglichen, welche von den jeweiligen Taktgebern 48a, 48b erzeugt wurden. Durch die beschriebene Wechselwirkung mit dem jeweiligen Regelelement 52a, 52b kann so mit Hilfe des jeweiligen Regelkreises die Asynchronität der Taktgeber 48a, 48b individuell verringert werden, wodurch sich das elektronische System hinsichtlich seiner Präzision verbessern lässt.

Figur 5 zeigt eine Erweiterung der Darstellung aus Figur 2 um die Verschaltung mit den zugehörigen Elektromotoren und die Leistungselektroniken. Das FFA-Steuergerät 30 weist neben dem FFA-Mikroprozessor 32 noch eine FFA-Leistungselektronik 58 auf. Diese FFA-Leistungselektronik 58 ist über drei Leitungen mit einem 3-Phasen-Elektromotor 60 verbunden.

Der erste RWA-Mikroprozessor 36 und der zweite RWA-Mikroprozessor 38 sind über eine erste RWA-Leistungselektronik 62 und eine zweite RWA-Leistungselektronik 64 über jeweils drei Leitungen mit einem 6-Phasen-Elektromotor 66 verbunden.

Die Kommunikation zwischen den beschriebenen Steuergeräten 30, 34 erfolgt in dem in Fig. 5 dargestellten Ausführungsbeispiel über mindestens zwei Bussysteme A, B, wobei das Bussystem A eine direkte Verbindung zwischen dem FFA-Steuergerät 30 und dem RWA-Steuergerät 34 herstellt. Bussystem B stellt eine Verbindung zum nicht dargestellten Fahrzeugbussystem und damit zu anderen, dem Fahrzeug zugeordneten Steuergeräten her.

Eine weitere hier nicht dargestellte direkte Kommunikationsverbindung kann zwischen dem ersten RWA-Mikroprozessor 36 und dem zweiten RWA-Mikroprozessor 38 bestehen, so dass hier optional ebenfalls Daten direkt ausgetauscht werden können.

### Bezugszeichenliste

- 10: Lenkung
- 12: Lenkinstrument
- 14: Lenkrad
- 16: Lenkwelle
- 18: Force-Feedback-Aktuator (FFA)
- 20: FFA-Elektromotor
- 22: lenkbares Rad
- 24: Road-Wheel-Aktuator (RWA)
- 26: Lenkstange
- 28: RWA-Elektromotor
- 30: FFA-Steuergerät
- 32: FFA-Mikroprozessor
- 34: RWA-Steuergerät
- 36: erster RWA-Mikroprozessor
- 38: zweiter RWA-Mikroprozessor
- 40: Busleitung
- 42: Vergleichsmodul
- 44: Signal
- 46: Taktsignal
- 48: Taktgeber
- 50: Zeitdifferenz-Signal
- 52: Regelelement
- 54: Korrektursignal
- 56: elektronisches System
- 58: FFA-Leistungselektronik
- 60: 3-Phasen-Elektromotor
- 62: erste RWA-Leistungselektronik
- 64: zweite RWA-Leistungselektronik
- 66: 6-Phasen-Elektromotor

## Patentansprüche

1. Elektronisches System eines Kraftfahrzeuges mit mindestens zwei miteinander kommunizierenden Steuergeräten (30, 34), die jeweils zum Senden und Empfangen von Signalinformationen ausgebildet sind und jeweils einen eigenen Prozessor (32, 36, 38) mit eigenem Taktgeber (48) zum Takten des jeweiligen Steuergerätes (30, 34) aufweisen, **dadurch gekennzeichnet**,
wobei jedes Steuergerät (30, 34) dazu ausgebildet ist, zusätzlich zu einer Signalinformation einen Zeitstempel mit dem Zeitpunkt der Erzeugung eines Signals (44) zu erstellen, wobei das mit dem Zeitstempel versehene Signal (44) mit einem vom Taktgeber (48) erzeugten Taktsignal korrespondiert;
wobei von den mindestens zwei miteinander kommunizierenden Steuergeräten (30, 34) ein Steuergerät als Master-Steuergerät definiert ist und das andere der zwei Steuergeräte nicht als Master-Steuergerät definiert ist;
wobei das als nicht Master-Steuergerät definierte Steuergerät einen Regelkreis umfasst;
wobei der Regelkreis ein Vergleichsmodul (42), den Taktgeber (48) und ein Regelelement (52) umfasst,
wobei das Regelelement (52) derart ausgelegt ist, dass eine Zeitdifferenz zwischen zwei Zeitstempeln, welche sich auf die gleiche Signalinformation beziehen, als Größe eines Regelkreises zur Reduzierung der Asynchronität der Taktgeber (48) berücksichtigt wird, um eine Asynchronität der Taktgeber (48) zu verringern oder zu eliminieren,
wobei der Regelkreis derart ausgelegt ist, dass an dem Vergleichsmodul (42) beim Empfangen eines Signals (44) der Zeitpunkt der Erzeugung des Signals (44) mit dem korrespondierenden, von dem Taktgeber (48) erzeugten Taktsignal (46) abgeglichen wird und das Vergleichsmodul (42) aus der Zeitdifferenz aus dem Zeitpunkt der Erzeugung des Signals (44) und dem nächstkommenden Taktsignal (46) einen Zeitunterschied ermittelt und ein entsprechendes Zeitdifferenz-Signal (50) an das Regelelement (52) sendet und wobei das Regelelement (52) basierend auf dem Zeitdifferenz-Signal (50) ein Korrektursignal (54) für den Taktgeber (48) bereitstellt.

2. Elektronisches System nach dem vorstehenden Anspruch, **dadurch gekennzeichnet, dass** als Regelelement (52) ein Pl-Regler vorgesehen ist.

3. Elektronisches System nach dem vorstehenden Anspruch, **dadurch gekennzeichnet, dass** das P-Glied des Pl-Reglers zur dynamischen Anpassung der Takte und das I-Glied des PI-Reglers zur Ausregelung konstanter Synchronitätsabweichungen ausgelegt ist.

4. Elektronisches System nach einem der vorstehenden Ansprüche, **dadurch gekennzeichnet, dass** mindestens zwei Regelelemente (52) vorgesehen sind, die zu einer Kaskadenregelung verschaltet sind.

5. Elektronisches System nach einem der vorstehenden Ansprüche, **dadurch gekennzeichnet, dass** mindestens zwei Steuergeräte (30, 34) Teil einer redundanten Steuerung sind.

6. Elektronisches System nach dem vorstehenden Anspruch, **dadurch gekennzeichnet, dass** zwei Steuergeräte (30, 34) redundant ausgeführte Steuergeräte (30, 34) für Radaktuatoren einer elektronischen Lenkung (10) der Steer-by-Wire Bauart sind und ein Steuergerät (30, 34) einem Force-Feedback-Aktuator (18) zugeordnet ist, wobei die Steuergeräte (30, 34) funktional miteinander verbunden sind.

7. Elektronisches System nach einem der vorstehenden Ansprüche, **dadurch gekennzeichnet, dass** ein Start-Verzögerungsmodul vorgesehen ist, welches einen zeitverzögerten Start des Regelkreises ermöglicht und/oder den Start des Regelkreises vom Eintreten einer oder mehrere Bedingungen abhängig macht.

8. Verfahren zur Steuerung eines elektronischen Systems (56) nach einem der vorstehenden Ansprüche, **dadurch gekennzeichnet, dass** eines der Steuergeräte (30, 34) als Master-Steuergerät definiert ist und jedes nicht als Master-Steuergerät definierte Steuergerät (30, 34) zyklische Signalinformationen mit Zeitstempel und einer fest definierten Zykluszeit sendet, wobei diese Signalinformationen als Größe des Regelkreises zur Reduzierung der Asynchronität der Taktgeber (48) berücksichtigt werden, um eine Asynchronität der Taktgeber (48) zu verringern oder zu eliminieren.

## Claims

1. Electronic system of a motor vehicle, comprising at least two control units (30, 34) which communicate with each other, each designed to send and receive signal information and each having its own processor (32, 36, 38) with its own clock generator (48) for clocking the particular control unit (30, 34), **characterized by**
each
control unit (30, 34) being designed to create, in addition to signal information, a time stamp with the time of generation of a signal (44), the signal (44) provided with the time stamp corresponding to a clock signal generated by the clock generator (48);
of the at least two control units (30, 34) which communicate with each other, one control unit being defined as a master control unit and the other of the two control units being defined as a non-master control unit;
the control unit defined as a non-master control unit comprising a control loop;
the control loop comprising a comparison module (42), the clock generator (48) and a control element (52),
the control element (52) being designed such that a time difference between two time stamps which relate to the same signal information is taken into account as a size of a control loop for reducing the asynchronicity of the clock generators (48) in order to reduce or eliminate an asynchronicity of the clock generators (48),
the control loop being designed such that, at the comparison module (42), upon receiving a signal (44), the time at which the signal (44) was generated is compared with the corresponding clock signal (46) generated by the clock generator (48), and the comparison module (42) determines a time gap from the time difference between the time at which the signal (44) was generated and the next clock signal (46) and sends a corresponding time difference signal (50) to the control element (52), and the control element (52) providing a correction signal (54) for the clock generator (48) based on the time difference signal (50).

2. Electronic system according to the preceding claim, **characterized in that** a PI controller is provided as the control element (52).

3. Electronic system according to the preceding claim, **characterized in that** the P element of the PI controller is designed for dynamic adjustment of the clock cycles and the I element of the PI controller is designed for compensation of constant synchronicity deviations.

4. Electronic system according to any of the preceding claims, **characterized in that** at least two control elements (52) are provided which are connected to form a cascade control.

5. Electronic system according to any of the preceding claims, **characterized in that** at least two control units (30, 34) are part of a redundant control system.

6. Electronic system according to the preceding claim, **characterized in that** two control units (30, 34) are redundant control units (30, 34) for wheel actuators of an electronic steering system (10) of the steer-by-wire type and one control unit (30, 34) is assigned to a force feedback actuator (18), the control units (30, 34) being functionally connected to one another.

7. Electronic system according to any of the preceding claims, **characterized in that** a start delay module is provided which allows a time-delayed start of the control loop and/or makes the start of the control loop dependent on the occurrence of one or more conditions.

8. Method for controlling an electronic system (56) according to any of the preceding claims, **characterized in that** one of the control units (30, 34) is defined as a master control unit and each control unit (30, 34) not defined as a master control unit sends cyclic signal information with a time stamp and a fixedly defined cycle time, this signal information being taken into account as a size of the control loop for reducing the asynchronicity of the clock generators (48) in order to reduce or eliminate an asynchronicity of the clock generators (48).

## Revendications

1. Système électronique d'un véhicule automobile comportant au moins deux appareils de commande (30, 34) communiquant entre eux, qui sont réalisés respectivement pour l'émission et la réception d'informations de signal et qui présentent respectivement leur propre processeur (32, 36, 38) comportant leur propre générateur d'horloge (48) pour la synchronisation de l'appareil de commande (30, 34) respectif, **caractérisé en ce que**
dans lequel chaque
appareil de commande (30, 34) est réalisé pour produire, en plus d'une information de signal, un horodatage comportant le moment de la production d'un signal (44), dans lequel le signal (44) comportant l'horodatage correspond à un signal d'horloge produit par le générateur d'horloge (48) ;
dans lequel, parmi les au moins deux appareils de commande (30, 34) communiquant entre eux, un appareil de commande est défini comme appareil de commande maître et l'autre des deux appareils de commande n'est pas défini comme appareil de commande maître ;
dans lequel l'appareil de commande non défini comme appareil de commande maître comprend une boucle de régulation ;
dans lequel la boucle de régulation comprend un module de comparaison (42), le générateur d'horloge (48) et un élément de régulation (52),
dans lequel l'élément de régulation (52) est conçu de telle sorte qu'une différence de temps entre deux horodatages qui se rapportent à la même information de signal est prise en compte en tant que variable d'une boucle de régulation pour réduire l'asynchronisme du générateur d'horloge (48), afin de réduire ou d'éliminer un asynchronisme du générateur d'horloge (48),
dans lequel le circuit de régulation est conçu de telle sorte que, sur le module de comparaison (42), lors de la réception d'un signal (44), le moment de la production du signal (44) est comparé au signal d'horloge (46) correspondant produit par le générateur d'horloge (48) et le module de comparaison (42) détermine une différence de temps à partir de la différence de temps entre le moment de la production du signal (44) et le signal d'horloge (46) le plus proche et envoie un signal de différence de temps (50) correspondant à l'élément de régulation (52), et dans lequel l'élément de régulation (52) met à disposition un signal de correction (54) pour le générateur d'horloge (48) sur la base du signal de différence de temps (50).

2. Système électronique selon la revendication précédente,
**caractérisé en ce qu'**un régulateur PI est prévu comme élément de régulation (52).

3. Système électronique selon la revendication précédente,
**caractérisé en ce que** l'organe P du régulateur PI est conçu pour l'adaptation dynamique de la synchronisation et l'organe I du régulateur PI est conçu pour la régulation d'écarts de synchronisme constants.

4. Système électronique selon l'une des revendications précédentes, **caractérisé en ce qu'**il est prévu au moins deux éléments de régulation (52) qui sont branchés pour former une régulation en cascade.

5. Système électronique selon l'une des revendications précédentes, **caractérisé en ce qu'**au moins deux appareils de commande (30, 34) font partie d'une commande redondante.

6. Système électronique selon la revendication précédente,
**caractérisé en ce que** deux appareils de commande (30, 34) sont des appareils de commande (30, 34) réalisés redondants pour des actionneurs de roue d'une direction électronique (10) du type à commande électrique et un appareil de commande (30, 34) est associé à un actionneur à retour de force (18), dans lequel les appareils de commande (30, 34) sont reliés entre eux de manière fonctionnelle.

7. Système électronique selon l'une des revendications précédentes, **caractérisé en ce qu'**il est prévu un module de temporisation de démarrage qui permet un démarrage différé de la boucle de régulation et/ou qui fait dépendre le démarrage de la boucle de régulation de la réalisation d'une ou de plusieurs conditions.

8. Procédé de commande d'un système électronique (56) selon l'une des revendications précédentes, **caractérisé en ce que** l'un des appareils de commande (30, 34) est défini comme appareil de commande maître et chaque appareil de commande (30, 34) non défini comme appareil de commande maître envoie des informations de signal cycliques comportant un horodatage et un temps de cycle défini de manière fixe, dans lequel ces informations de signal sont prises en compte comme variable de la boucle de régulation pour réduire l'asynchronisme du générateur d'horloge (48), afin de réduire ou d'éliminer un asynchronisme du générateur d'horloge (48).
